(19) **Europäisches Patentamt / European Patent Office / Office européen des brevets**

(11) **EP 4 733 174 A1**

(12) **EUROPEAN PATENT APPLICATION**
published in accordance with Art. 153(4) EPC

(43) Date of publication:
**29.04.2026 Bulletin 2026/18**

(21) Application number: **23942315.5**

(22) Date of filing: **20.06.2023**

(51) International Patent Classification (IPC):
**B62D 6/00** *(2006.01)* **B62D 5/04** *(2006.01)*

(52) Cooperative Patent Classification (CPC):
**B62D 5/0403; B62D 5/046**

(86) International application number:
**PCT/JP2023/022803**

(87) International publication number:
**WO 2024/261878 (26.12.2024 Gazette 2024/52)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **JTEKT CORPORATION**
**Kariya-shi, Aichi 448-8652 (JP)**

(72) Inventors:
• **INDEN, Yuki**
 **Kariya-shi, Aichi 448-8652 (JP)**
• **TAMAIZUMI, Terutaka**
 **Kariya-shi, Aichi 448-8652 (JP)**

(74) Representative: **Winter, Brandl - Partnerschaft mbB**
**Alois-Steinecker-Straße 22**
**85354 Freising (DE)**

(54) **STEERING CONTROL DEVICE**

(57) A command value calculation unit (62, 72) includes: a first processing unit (83) configured to calculate a target value ($T_h{}^*$) of steering torque ($T_h$); a second processing unit (84) configured to calculate a first torque command value ($T_1{}^*$) through feedback control of the steering torque; a third processing unit (85) configured to calculate a target value ($\theta_p{}^*$) of a rotation angle ($\theta_p$) of a shaft (23) configured to rotate in conjunction with a steering operation of steered wheels (12); a fourth processing unit (86) configured to calculate a second torque command value ($T_2{}^*$) through feedback control of an actual angle; and a fifth processing unit (87) configured to calculate a command value (TA*, TB*) based on the first torque command value and the second torque command value. At least one of the second processing unit and the fourth processing unit includes a characteristic changing unit (93B, 94C) configured to perform a process of changing responsiveness of the feedback control in accordance with the drive mode of a motor.

Fig.4

# Description

TECHNICAL FIELD

The present disclosure relates to steering control devices.

BACKGROUND ART

Conventionally, there has been known a control device that controls a motor for steering the steered wheels of a vehicle. For example, the control device of Patent Document 1 controls the motor by executing feedback control of the steering torque and feedback control of the steered angle.

Related Art Documents

Patent Documents

Patent Document 1: Japanese Unexamined Patent Application Publication No. 2020-203499 (JP 2020-203499 A)

SUMMARY OF THE INVENTION

Problem to be Solved by the Invention

Vehicle control devices are expected to ensure the responsiveness of feedback control.

Means for Solving the Problem

A steering control device according to an aspect of the present disclosure is configured to control a motor. The motor is configured to drive a steering system configured to steer a steered wheel of a vehicle, and includes two winding groups. The steering control device includes two command value calculation units respectively corresponding to the two winding groups. Each of the command value calculation units is configured to calculate, based on a steering state, a command value that is a target value of torque to be generated in a corresponding one of the winding groups. Each of the command value calculation units includes a first processing unit, a second processing unit, a third processing unit, a fourth processing unit, and a fifth processing unit. The first processing unit is configured to calculate, based on the steering state, a target value of steering torque. The second processing unit is configured to calculate a first torque command value through execution of feedback control that causes the steering torque to follow the target value of the steering torque. The third processing unit is configured to calculate, based on the steering state and the first torque command value, a target value of a rotation angle of a shaft configured to rotate in conjunction with a steering operation of the steered wheel. The fourth processing unit is configured to calculate a second torque command value through execution of feedback control that causes an actual angle to follow the target value of the rotation angle. The fifth processing unit is configured to calculate the command value based on the first torque command value and the second torque command value. At least one of the second processing unit and the fourth processing unit includes a characteristic changing unit configured to perform a responsiveness changing process of changing responsiveness of the feedback control in accordance with the drive mode of the motor.

BRIEF DESCRIPTION OF THE DRAWINGS

[FIG. 1] FIG. 1 is a configuration diagram of an electric power steering system equipped with a steering control device according to an embodiment.

[FIG. 2] FIG. 2 is a block diagram of a motor and the steering control device in FIG. 1.

[FIG. 3] FIG. 3 is a block diagram of a first command value calculation unit and a second command value calculation unit in FIG. 2.

[FIG. 4] FIG. 4 is a block diagram of a torque feedback control unit in FIG. 3.

[FIG. 5] FIG. 5 is a block diagram of an angle feedback control unit in FIG. 3.

MODES FOR CARRYING OUT THE INVENTION

A steering control device according to an embodiment will be described. The steering control device controls, for example, an electric power steering system (hereinafter referred to as "EPS 10") of a vehicle. The EPS 10 is a type of steering system for a vehicle.

<Configuration of EPS 10>

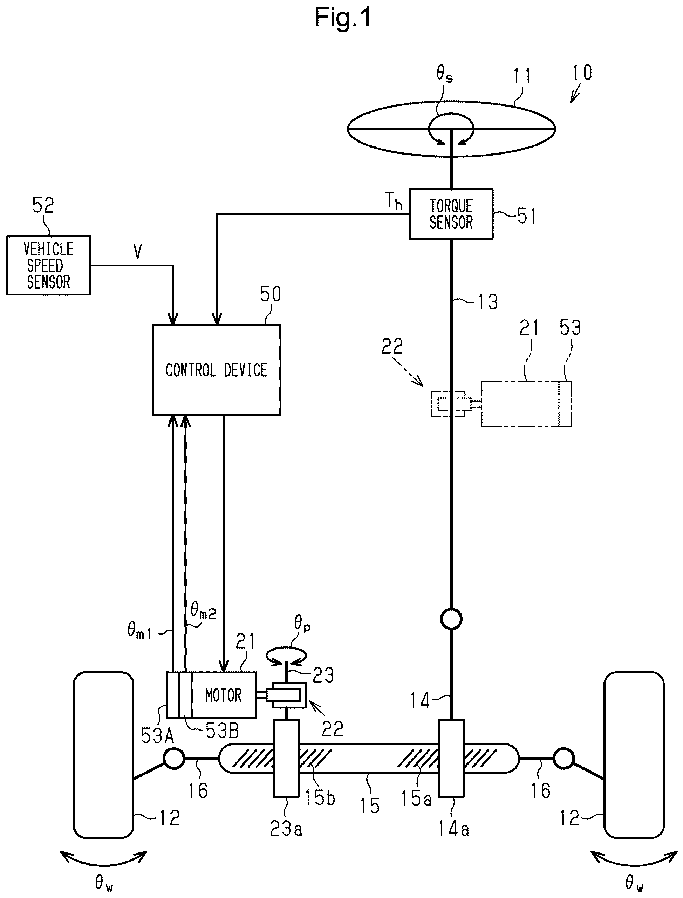

As shown in FIG. 1, in the EPS 10, a steering wheel 11 and steered wheels 12 are mechanically connected for power transmission. The EPS 10 includes a steering shaft 13, a first pinion shaft 14, and a steered shaft 15.

A first end of the steering shaft 13 is connected to the steering wheel 11. A second end of the steering shaft 13 is connected to the first pinion shaft 14. The steered shaft 15 extends in the vehicle width direction. Both ends of the steered shaft 15 are connected to the steered wheels 12 via tie rods 16. The first pinion shaft 14 is provided so as to intersect the steered shaft 15. Pinion teeth 14a of the first pinion shaft 14 mesh with first rack teeth 15a of the steered shaft 15. The steered shaft 15 moves linearly in conjunction with a rotational operation of the steering wheel 11. The linear motion of the steered shaft 15 is transmitted to the steered wheels 12 via the tie rods 16. As a result, the steered angle $\theta_w$ of the steered wheels 12 changes.

The EPS 10 includes a motor 21 and a reduction mechanism 22. The motor 21 generates an assist torque. The assist torque is a force for assisting the driver in steering the steering wheel 11, and is a force that acts in the same direction as the direction in which the driver operates the steering wheel 11. The motor 21 is, for example, a three-phase brushless motor. The motor 21 is connected to a second pinion shaft 23 via the reduction mechanism 22. Pinion teeth 23a of the second pinion shaft 23 mesh with second rack teeth 15b of the steered shaft 15. Rotation of the motor 21 is decelerated by the reduction mechanism 22. The decelerated rotational force of the motor 21 is transmitted, as assist torque, to the steered shaft 15 via the second pinion shaft 23. Accordingly, the steered shaft 15 moves in the vehicle width direction in response to rotation of the motor 21. The second pinion shaft 23 corresponds to a shaft that rotates in conjunction with a steering operation of the steered wheels 12.

The EPS 10 includes a control device 50. The control device 50 is an example of a steering control device, and includes a processing circuit including one of the following three configurations A1, A2, A3.

A1. One or more processors that operate in accordance with a computer program that is software. The processor includes a CPU (Central Processing Unit) and a memory.
A2. One or more dedicated hardware circuits, such as an application-specific integrated circuit (ASIC), that perform at least part of various processes.
A3. A hardware circuit configured by combining the two configurations A1, A2.

The memory is a computer-readable medium and stores programs that describe processes or instructions for the computer. **In** the present embodiment, the computer is a CPU. The memory includes a RAM (Random Access Memory) and a ROM (Read Only Memory). The CPU executes various types of control by executing the programs stored in the memory at a predetermined computation cycle.

The control device 50 controls the motor 21 based on the detection results from sensors mounted on the vehicle. The sensors include a torque sensor 51, a vehicle speed sensor 52, a first rotation angle sensor 53A, and a second rotation angle sensor 53B.

The torque sensor 51 detects a steering torque $T_h$ based on the amount of twist of the steering shaft 13. The steering torque $T_h$ is a torque applied to the steering shaft 13 through a rotational operation of the steering wheel 11. The vehicle speed sensor 52 detects a vehicle speed V. The first rotation angle sensor 53A and the second rotation angle sensor 53B are provided on the motor 21. The first rotation angle sensor 53A detects a

first rotation angle $\theta_{m1}$ of the motor 21. The second rotation angle sensor 53B detects a second rotation angle $\theta_{m2}$ of the motor 21.

The control device 50 executes vector control of the motor 21 using the first rotation angle $\theta_{m1}$ detected by the first rotation angle sensor 53A and the second rotation angle $\theta_{m2}$ detected by the second rotation angle sensor 53b. The control device 50 also executes assist control. The assist control is control for supplying electric power to the motor 21 such that the motor 21 generates an assist torque corresponding to the steering torque $T_h$. The control device 50 calculates a target assist torque based on the steering torque $T_h$ detected by the torque sensor 51 and the vehicle speed V detected by the vehicle speed sensor 52. The target assist torque is a target value of the assist torque generated by the motor 21. The control device 50 controls power supply to the motor 21 such that an actual assist torque applied to the steered shaft 15 matches the target assist torque. The control device 50 is an example of a steering control device.

<Configuration of Motor 21>

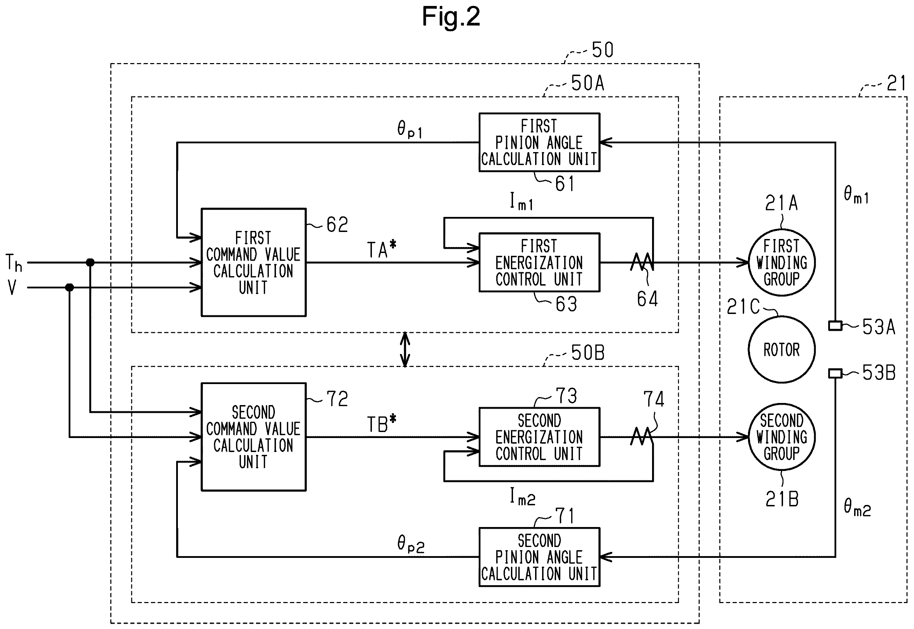

Next, the configuration of the motor 21 will be described. As shown in FIG. 2, the motor 21 includes a first winding group 21A, a second winding group 21B, and a rotor 21C. The first winding group 21A includes a first U-phase coil, a first V-phase coil, and a first W-phase coil. The second winding group 21B includes a second U-phase coil, a second V-phase coil, and a second W-phase coil. The first winding group 21A and the second winding group 21B are provided on a common stator. The first winding group 21A and the second winding group 21B have the same electrical characteristics.

<Configuration of Control Device 50>

The configuration of the control device 50 will now be described in detail. As shown in FIG. 2, the control device 50 individually controls power supply to the first winding group 53A and power supply to the second winding group 53B. The control device 50 includes a first control unit 50A that controls power supply to the first winding group 53A, and a second control unit 50B that controls power supply to the second winding group 53B.

The first control unit 50A includes a first pinion angle calculation unit 61, a first command value calculation unit 62, and a first energization control unit 63. The first pinion angle calculation unit 61 calculates a first pinion angle $\theta_{p1}$ based on the first rotation angle $\theta_{m1}$ of the motor 21 detected by the first rotation angle sensor 53A. The first pinion angle $\theta_{p1}$ is the rotation angle of the second pinion shaft 23. The first pinion angle calculation unit 61 calculates the first pinion angle $\theta_{p1}$ by, for example, dividing the first rotation angle $\theta_{m1}$ by the reduction ratio of the reduction mechanism 22.

The first command value calculation unit 62 calculates a first assist command value TA* based on the steering torque $T_h$ detected by the torque sensor 51 and the vehicle speed V detected by the vehicle speed sensor 52. The first assist command value TA* indicates a target value of torque to be generated in the first winding group 21A. The greater the absolute value of the steering torque $T_h$ and the lower the vehicle speed V, the greater the absolute value of the first assist command value TA*.

The first energization control unit 63 supplies electric power corresponding to the first assist command value TA* to the first winding group 21A. That is, the first energization control unit 63 calculates a first current command value based on the first assist command value TA*. The first current command value is a target value of current to be supplied to the first winding group 21A. The first current command value is set to, for example, a value of one half (50%) of the amount of current (100%) required for the motor 21 to generate the target assist torque.

The first energization control unit 63 detects a first current $I_{m1}$ supplied to the first winding group 21A through a first current sensor 64. The first current sensor 64 is provided in a power supply path between the first control unit 50A and the first winding group 21A. The first energization control unit 63 executes feedback control of the first current $I_{m1}$. That is, the first energization control unit 63 calculates a deviation between the first current command value and the value of the first current $I_{m1}$, and controls power supply to the first winding group 21A so as to eliminate the calculated deviation. As a result, the first winding group 21A generates a first torque corresponding to the first assist command value TA*.

The second control unit 50B basically has the same configuration as the first control unit 50A. The second control unit 50B includes a second pinion angle calculation unit 71, a second command value calculation unit 72, and a second energization control unit 73.

The second pinion angle calculation unit 71 calculates a second pinion angle $\theta_{p2}$ based on the second rotation angle $\theta_{m2}$ of the motor 21 detected by the second rotation angle sensor 53b. The second command value calculation unit 72 calculates a second assist command value TB* based on the steering torque $T_h$ detected by the torque sensor 51 and the vehicle speed V detected by the vehicle speed sensor 52. The second assist command value TB* indicates a target value of torque to be generated in the second winding group 21B. The greater the absolute value of the steering torque $T_h$ and the lower the vehicle speed V, the greater the absolute value of the second assist command value TB*.

The second energization control unit 73 supplies electric power corresponding to the second assist command value TB* to the second winding group 21B. That is, the second energization control unit 73 calculates a second current command value based on the second assist command value TB*. The second current command value is a target value of current to be supplied to the second winding group 21B. The second current command value is set to, for example, a value of one half (50%) of the amount of current (100%) required for the motor 21 to generate the target assist torque.

The second energization control unit 73 detects a second current $I_{m2}$ supplied to the second winding group 21B through a second current sensor 74. The second current sensor 74 is provided in a power supply path between the second control unit 50B and the second winding group 21B. The second energization control unit 73 executes feedback control of the second current $I_{m2}$. That is, the second energization control unit 73 calculates a deviation between the second current command value and the value of the second current $I_{m2}$, and controls power supply to the second winding group 21B so as to eliminate the calculated deviation. As a result, the second winding group 21B generates a second torque corresponding to the second assist command value TB*.

The motor 21 generates a torque that is a sum of the first torque generated by the first winding group 21A and the second torque generated by the second winding group 21B. Ideally, the sum of the first torque and the second torque matches the target assist torque.

The first control unit 50A and the second control unit 50B each include a microcomputer. The microcomputer of the first control unit 50A and the microcomputer of the second control unit 50B transmits and receives information to and from each other via a communication line. The information includes, for example, abnormality information of the first control unit 50A and abnormality information of the second control unit 50B. The information also includes values of flags that indicate various states. The first control unit 50A and the second control unit 50B cooperatively control driving of the motor 21 based on the information transmitted and received between them.

Depending on product specifications, there may be a master-slave relationship between the first control unit 50A and the second control unit 50B. **In** this case, for example, the first control unit 50A functions as a master, and the second control unit 50B functions as a slave. Depending on product specifications, the first control unit 50A and the second control unit 50B may have an equal relationship.

The first control unit 50A and the second control unit 50B execute a predetermined startup sequence in response to turning on of a vehicle power supply. The startup sequence includes, for example, an initial check and a midpoint learning process. The initial check is an initial inspection executed in response to turning on of the vehicle power supply, and includes, for example, a hardware check, initialization of a CPU, and initialization of variables or flags. The midpoint learning process is a process of learning a steering neutral position of the steering wheel 11. During a period in which the vehicle power supply is off, the first control unit 50A and the second control unit 50B are kept in a stopped state.

The first control unit 50A and the second control unit 50B are reset when a predetermined reset factor occurs. The reset is a process of initializing the internal states of the first control unit 50A and the second control unit 50B. The reset factor includes, for example, a drop in power supply voltage of the first control unit 50A and the second control unit 50B. When the power supply voltage temporarily drops and the value of the power supply voltage falls out of a guaranteed operating range, the first control unit 50A and the second control unit 50B are reset. The guaranteed operating range is a range of voltages at which operation is guaranteed by specifications. When the reset is completed, the first control unit 50A and the second control unit 50B execute the above startup sequence.

<Configuration of First Command Value Calculation Unit 62>

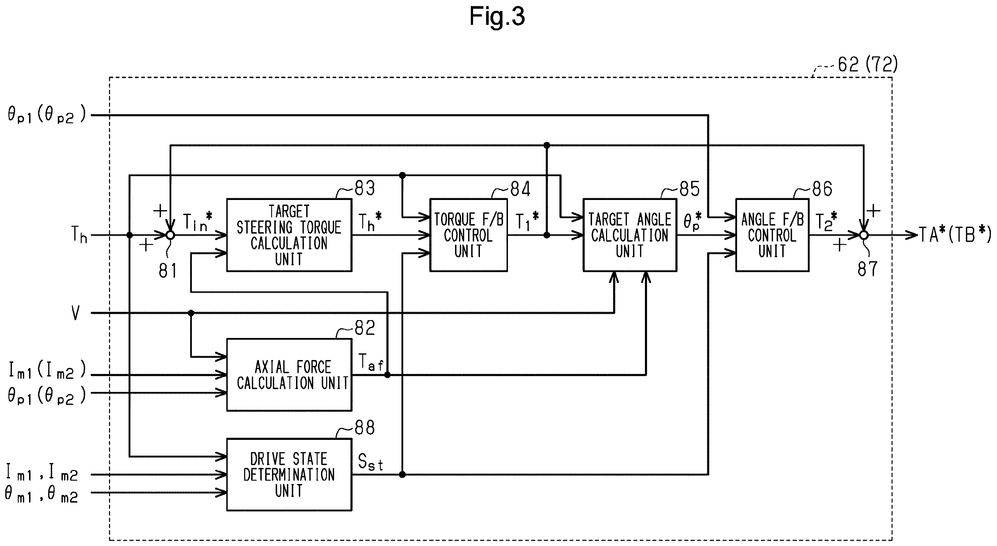

Next, the first command value calculation unit 62 will be described. As shown in FIG. 3, the first command value calculation unit 62 includes a first adder 81, an axial force calculation unit 82, a target steering torque calculation unit 83, a torque feedback control unit 84, a target angle calculation unit 85, an angle feedback control unit 86, and a second adder 87.

The first adder 81 calculates an input torque $T_{in}^*$ by adding the steering torque $T_h$ detected by the torque sensor 51 and a first assist torque $T_1^*$ calculated by the torque feedback control unit 72. The input torque $T_{in}^*$ is a torque applied to the steering shaft 13.

The axial force calculation unit 82 receives, for example, the first current $I_{m1}$ detected by the first current sensor 64 and the first pinion angle $\theta_{p1}$ calculated by the first pinion angle calculation unit 61. The axial force calculation unit 82 calculates an axial force acting on the steered shaft 15 based on the first current $I_{m1}$ and the first pinion angle $\theta_{p1}$, and calculates a torque conversion value $T_{af}$ by converting the calculated axial force into a torque applied to steering shaft 13.

The target steering torque calculation unit 83 receives the input torque $T_{in}^*$ calculated by the first adder 81 and the torque conversion value $T_{af}$ calculated by the axial force calculation unit 82. The target steering torque calculation unit 83 calculates a target steering torque $T_h^*$ based on the input torque $T_{in}^*$ and the torque conversion value $T_{af}$. The target steering torque $T_h^*$ is a target value of the steering torque $T_h$ applied to the steering wheel 11. The greater the absolute value of the input torque $T_{in}^*$, the greater the absolute value of the target steering torque $T_h^*$. The target steering torque calculation unit 83 corresponds to the first processing unit.

The torque feedback control unit 84 receives the steering torque $T_h$ detected by the torque sensor 51 and the target steering torque $T_h^*$ calculated by the target steering torque calculation unit 83. The torque feedback control unit 84 calculates a first assist torque $T_1^*$ by executing feedback control of the steering torque $T_h$ such that the steering torque $T_h$ detected by the torque sensor 51 follows the target steering torque $T_h^*$. The first assist

torque $T_1^*$ corresponds to the first torque command value. The torque feedback control unit 84 corresponds to the second processing unit.

The target angle calculation unit 85 receives the steering torque $T_h$ detected by the torque sensor 51, the torque conversion value $T_{af}$ calculated by the axial force calculation unit 82, and the first assist torque $T_1^*$ calculated by the torque feedback control unit 84. The target angle calculation unit 85 calculates a target pinion angle $\theta_p^*$ based on the steering torque $T_h$, the torque conversion value $T_{af}$, and the first assist torque $T_1^*$. The target pinion angle $\theta_p^*$ is a target value of the rotation angle of the pinion shaft 23. The target angle calculation unit 85 corresponds to the third processing unit.

The target angle calculation unit 73 calculates the target pinion angle $\theta_p^*$ using, for example, a model expressed by the following equation (A). The model is one that models an ideal pinion angle $\theta_p$ when a torque corresponding to the first assist torque

$$T_1^* = J\theta_p^{*\prime\prime} + C\theta_p^{*\prime} + K\theta_p^* \ldots (A)$$

$T_1^*$ is applied to the steering shaft 13.

"J" is an inertia coefficient that models a moment of inertia of the EPS 10. "C" is a viscous coefficient that models friction etc. of the EPS 10. "K" is a spring coefficient that models, as a spring, specifications such as suspension and wheel alignment of a vehicle on which the EPS 10 is mounted. The inertia coefficient J, the viscous coefficient C, and the spring coefficient K take values corresponding to the vehicle speed V detected by the vehicle speed sensor 52. "$\theta_p^{*\prime\prime}$" denotes a second-order time derivative of the target pinion angle $\theta_p$, and "$\theta_p^{*\prime}$" denotes a first-order time derivative of the target pinion angle $\theta_p^*$

The angle feedback control unit 86 receives the target pinion angle $\theta_p^*$ calculated by the target angle calculation unit 85 and the pinion angle $\theta_p$ calculated by the first pinion angle calculation unit 61. The angle feedback control unit 86 calculates a second assist torque $T_2^*$ by executing feedback control of the pinion angle $\theta_p$ such that the pinion angle $\theta_p$ calculated by the first pinion angle calculation unit 61 follows the target pinion angle $\theta_p^*$. The second assist torque $T_2^*$ corresponds to the second torque command value. The angle feedback control unit 86 corresponds to the fourth processing unit.

The second adder 87 calculates a first assist command value TA* by adding the first assist torque $T_1^*$ calculated by the torque feedback control unit 72 and the second assist torque $T_2^*$ calculated by the angle feedback control unit 74. When a current corresponding to the first assist command value TA* is supplied to the first winding group 21A, the first winding group 21A generates a torque corresponding to the first assist command value TA*. The first assist command value TA* corresponds to a command value indicating a target value of the torque to be generated in the first winding group 21A. The second adder 87 corresponds to the fifth processing unit.

<Configuration of Second Command Value Calculation Unit 72>

Next, the second command value calculation unit 72 will be described. The second command value calculation unit 72 has the same configuration as the first command value calculation unit 62. The second command value calculation unit 72 receives the steering torque $T_h$, the second pinion angle $\theta_{p2}$, the second rotation angle $\theta_{m2}$, and the second current $I_{m2}$. Like the first command value calculation unit 62, the second command value calculation unit 72 calculates a second assist command value $TB^*$ using the steering torque $T_h$, the vehicle speed V, the second pinion angle $\theta_{p2}$, the second rotation angle $\theta_{m2}$, and the second current $I_{m2}$. When a current corresponding to the second assist command value $TB^*$ is supplied to the second winding group 21B, the second winding group 21B generates a torque corresponding to the second assist command value $TB^*$. The second assist command value $TB^*$ corresponds to a command value indicating a target value of the torque to be generated in the second winding group 21B.

<Drive Modes of Motor 21>

Next, the drive modes of the motor 21 will be described. The drive modes include a cooperative drive mode, an independent drive mode, a single-system drive mode, and a reset drive mode.

The cooperative drive mode is a normal drive mode in which the first control unit 50A and the second control unit 50B are both operating normally. That is, the cooperative drive mode is a first drive mode in a case where power supply to both the first winding group 21A and the second winding group 21B is normal. When the cooperative drive mode is selected as the drive mode, the first control unit 50A and the second control unit 50B share with each other information such as assist command values and limit values, and cause the same torque to be generated in both the first winding group 21A and the second winding group 21B of the motor 21. In a case where there is a master-slave relationship between the first control unit 50A and the second control unit 50B, when the cooperative drive mode is selected as the drive mode, for example, the slave may control driving of the motor 21 using the assist command value calculated by the master.

The independent drive mode is a drive mode in a case where the operation of either the first control unit 50A or the second control unit 50B has momentarily stopped, but an abnormality has not been determined and there is a possibility of returning to normal operation. That is, the independent drive mode is a second drive mode in a case where an abnormality in power supply to either the first winding group 21A or the second winding group 21B has not been determined and there is a possibility of returning to normal. **In** a case where there is a master-slave relationship between the first control unit 50A and the second control unit 50B, the master-slave relationship between the first control unit 50A and the second control unit 50B is temporarily released when the independent drive mode is selected as the drive mode. For example, when the operation of the first control unit 50A has momentarily stopped, the second control unit 50B causes torque to be generated in the second winding group 21B based on its own calculation results without using information from the first control unit 50A. When the operation of the second control unit 50B has momentarily stopped, the first control unit 50A causes torque to be generated in the first winding group 21A based on its own calculation results without using information from the second control unit 50B.

The single-system drive mode is a drive mode in a case where an abnormality in either the first control unit 50A or the second control unit 50B has been determined and there is no possibility of returning to normal operation. That is, the single-system drive mode is a third drive mode in a case where an abnormality in power supply to either the first winding group 21A or the second winding group 21B has been determined, and there is no possibility of returning to normal. In a case where there is a master-slave relationship between the first control unit 50A and the second control unit 50B, the master-slave relationship between the first control unit 50A and the second control unit 50B is temporarily released when the single-system drive mode is selected as the drive mode. For example, when an abnormality in the first control unit 50A is determined, the second control unit 50B alone causes the motor 21 to generate torque. When an abnormality in the second control unit 50B is determined, the first control unit 50A alone causes the motor 21 to generate torque.

The reset drive mode is a fourth drive mode in a case where either the first control unit 50A or the second control unit 50B is reset. For example, when the first control unit 50A is reset, the first control unit 50A performs, at the time of restarting after completion of the reset, a process of avoiding interference with the control of the motor 21 executed by the second control unit 50B. The process includes, for example, a process of determining whether to execute the startup sequence. When the startup sequence has been successfully completed before the first control unit 50A is reset, the first control unit 50A determines that the startup sequence need not be re-executed. The first control unit 50A, after being restarted, transitions its control state to the same state as that of the second control unit 50B that has not been reset.

When the second control unit 50B is reset, the second control unit 50B performs the same process as that of the first control unit 50A. The first control unit 50A and the second control unit 50B control driving of the motor 21 in the cooperative drive mode during normal operation in which no abnormality has occurred. When an abnormality determination condition is satisfied while the cooperative drive mode is selected as the drive mode, the first control unit 50A and the second control unit 50B switch the drive mode from the cooperative drive mode to the independent drive mode. When a return determination condition is satisfied before an abnormality is confirmed while the independent drive mode is selected as the drive mode, the first control unit 50A and the second control unit 50B return the drive mode from the independent drive mode to the cooperative drive mode. When the abnormality determination condition is satisfied while the independent drive mode is selected as the drive mode, the first control unit 50A and the second control unit 50B switch the drive mode from the independent drive mode to the single-system drive mode.

Examples of the abnormality include temporary abnormalities that are regarded as recoverable, such as a communication abnormality between the first control unit 50A and the second control unit 50B, a deviation between the first assist command value TA* and the second assist command value TB*, and a decrease in a current limit value.

<About Feedback Gains>

The first control unit 50A and the second control unit 50B are expected to ensure target value responses of the torque feedback control unit 84 and the angle feedback control unit 86. The target value response refers to a frequency characteristic of an actual value with respect to a target value. Accordingly, feedback gains of the torque feedback control unit 84 and the angle feedback control unit 86 are appropriately set in accordance with characteristics of a plant to be controlled, that is, characteristics of the EPS 10.

However, as described above, the first control unit 50A and the second control unit 50B have a plurality of drive modes for the motor 21. Therefore, switching of the drive mode may cause a change in characteristics of the EPS 10. For example, in a case where the feedback gains are set in accordance with the characteristics of the EPS 10 in the cooperative drive mode, the characteristics of the EPS 10 change when the drive mode shifts from the cooperative drive mode to the independent drive mode or the single-system drive mode. Accordingly, there is a concern that, with the switching of the drive mode, the responsiveness or stability of the torque feedback control unit 84 and the angle feedback control unit 86 may deteriorate.

Therefore, in the present embodiment, the following configuration is adopted for the first control unit 50A and the second control unit 50B.

<Drive State Determination Unit 88>

As shown in FIG. 3, the first command value calculation unit 62 includes a drive state determination unit 88. The drive state determination unit 88 determines the drive state of the motor 21 based on state variables of the EPS 10. Specifically, the drive state determination unit 88 determines the drive mode of the motor 21. The drive modes include the cooperative drive mode, the independent drive mode, the single-system drive mode, and the reset drive mode. The drive state determination unit 88 generates a state signal $S_{st}$ in accordance with the determination result of the drive mode. The state signal $S_{st}$ is an electrical signal indicating the drive mode of the motor 21.

The state variables include, for example, the steering torque $T_h$ detected by the torque sensor 51, the first current $I_{m1}$ detected by the first current sensor 64, and the first rotation angle $\theta_{m1}$ of the motor 21 detected by the first rotation angle sensor 53A. The state variables further include the second current $I_{m2}$ detected by the second current sensor 74 and the second rotation angle $\theta_{m2}$ of the motor 21 detected by the second rotation angle sensor 53B.

Like the first command value calculation unit 62, the second command value calculation unit 72 includes a drive state determination unit 88. The drive state determination unit 88 determines the drive mode of the motor 21 based on the state variables of the EPS 10, and generates a state signal $S_{st}$ in accordance with the determination result.

<Configuration of Torque Feedback Control Unit 84>

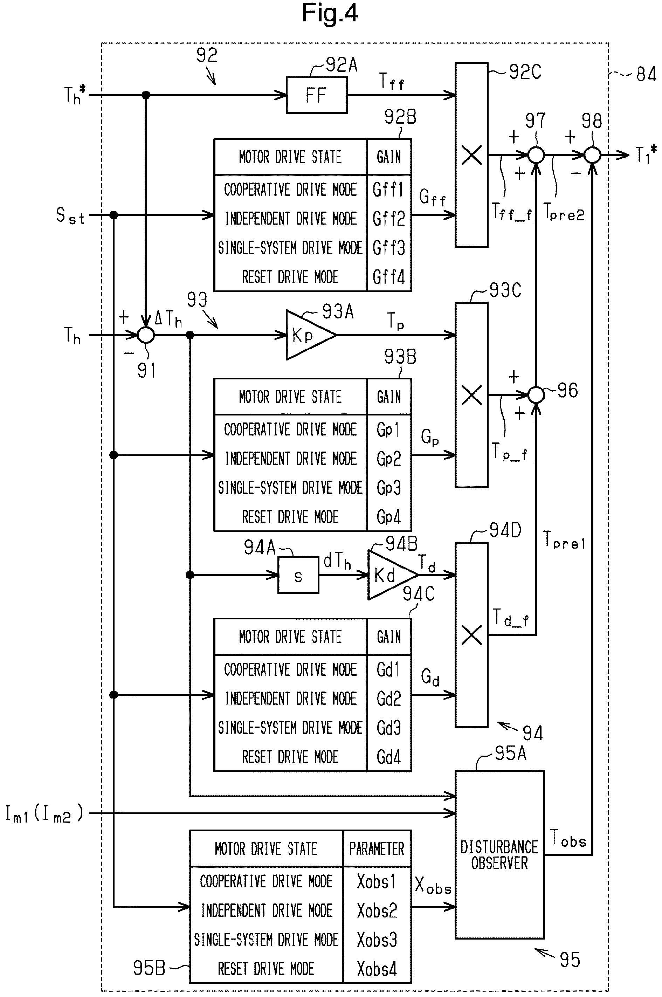

Next, the configuration of the torque feedback control unit 84 will be described. As shown in FIG. 4, the torque feedback control unit 84 includes a first subtractor 91, a feedforward control unit 92, a proportional control unit 93, a derivative control unit 94, a disturbance estimation unit 95, a third adder 96, a fourth adder 97, and a second subtractor 98.

The first subtractor 91 receives the target steering torque $T_h^*$ calculated by the target steering torque calculation unit 83 and the steering torque $T_h$ detected by the torque sensor 51. The first subtractor 91 calculates a torque deviation $\Delta T_h$. The torque deviation $\Delta T_h$ is the difference between the target steering torque $T_h^*$ and the steering torque $T_h$.

The feedforward control unit 92 performs a process of compensating for a response delay caused by the inertia of the EPS 10 to improve the responsiveness of control. The feedforward control unit 92 includes a feedforward processing unit 92A, a feedforward gain setting unit 92B, and a first multiplier 92C.

The feedforward processing unit 92A calculates a feedforward control torque $T_{ff}$ by executing feedforward control based on the target steering torque $T_h^*$. The feedforward processing unit 92A calculates the feedforward control torque $T_{ff}$ by, for example, taking the second-order derivative of the target steering torque $T_h^*$ and multiplying the value of the second-order derivative by the inertia of the EPS 10. The feedforward control torque $T_{ff}$ is an inertia compensation value. The inertia is obtained from, for example, a physical model of the EPS 10.

The feedforward gain setting unit 92B receives the state signal $S_{st}$ generated by the drive state determination unit 88, and sets a value of a feedforward gain $G_{ff}$ in accordance with the received state signal $S_{st}$. The feedforward gain $G_{ff}$ is a control parameter related to the responsiveness of the feedforward control.

When the state signal $S_{st}$ indicates the cooperative drive mode, the feedforward gain setting unit 92B sets the value of the feedforward gain $G_{ff}$ to a first feedforward gain $G_{ff1}$. When the drive mode of the motor 21 is the cooperative drive mode, the characteristics of the EPS 10 are measured, and the first feedforward gain $G_{ff1}$ is set to a value suitable for the measured characteristics of the EPS 10. The first feedforward gain $G_{ff1}$ is stored in a storage device of the control device 50.

When the state signal $S_{st}$ indicates the independent drive mode, the feedforward gain setting unit 92B sets the value of the feedforward gain $G_{ff}$ to a second feedforward gain $G_{ff2}$. When the drive mode of the motor 21 is the independent drive mode, the characteristics of the EPS 10 are measured, and the second feedforward gain $G_{ff2}$ is set to a value suitable for the measured characteristics of the EPS 10. The second feedforward gain $G_{ff2}$ is stored in the storage device of the control device 50.

When the state signal $S_{st}$ indicates the single-system drive mode, the feedforward gain setting unit 92B sets the value of the feedforward gain $G_{ff}$ to a third feedforward gain $G_{ff3}$. When the drive mode of the motor 21 is the single-system drive mode, the characteristics of the EPS 10 are measured, and the third feedforward gain $G_{ff3}$ is set to a value suitable for the measured characteristics of the EPS 10. The third feedforward gain $G_{ff3}$ is stored in the storage device of the control device 50.

When the state signal $S_{st}$ indicates the reset drive mode, the feedforward gain setting unit 92B sets the value of the feedforward gain $G_{ff}$ to a fourth feedforward gain $G_{ff4}$. When the drive mode of the motor 21 is the reset drive mode, the characteristics of the EPS 10 are measured, and the fourth feedforward gain $G_{ff4}$ is set to a value suitable for the measured characteristics of the EPS 10. The fourth feedforward gain $G_{ff4}$ is stored in the storage device of the control device 50.

The first multiplier 92C calculates a final feedforward control torque $T_{ff\_f}$ by multiplying the feedforward control torque $T_{ff}$ calculated by the feedforward processing unit 92A by the feedforward gain $G_{ff}$ set by the feedforward gain setting unit 92B.

The feedforward processing unit 92A and the first multiplier 92C constitute a characteristic changing unit that performs a responsiveness changing process of changing the responsiveness of the feedback control in accordance with the drive mode of the motor 21.

The proportional control unit 93 includes a proportional processing unit 93A, a correction proportional gain setting unit 93B, and a second multiplier 93C. The proportional processing unit 93A calculates a propor-

tional control torque $T_p$ by multiplying the torque deviation $\Delta T_h$ calculated by the first subtractor 91 by a proportional gain $K_p$. The proportional control torque $T_p$ is a value proportional to the torque deviation $\Delta T_h$. For example, the proportional processing unit 93A may calculate the proportional gain $K_p$ in accordance with the traveling state of the vehicle. The traveling state is reflected by, for example, the vehicle speed V.

The correction proportional gain setting unit 93B receives the state signal $S_{st}$ generated by the drive state determination unit 88, and sets the value of a correction proportional gain $G_p$ in accordance with the received state signal $S_{st}$. The correction proportional gain $G_p$ is a feedback gain that is a control parameter related to the responsiveness of the feedback control.

When the state signal $S_{st}$ indicates the cooperative drive mode, the correction proportional gain setting unit 93B sets the value of the correction proportional gain $G_p$ to a first correction proportional gain $G_{p1}$. When the drive mode of the motor 21 is the cooperative drive mode, the characteristics of the EPS 10 are measured, and the first correction proportional gain $G_{p1}$ is set to a value suitable for the measured characteristics of the EPS 10. The first correction proportional gain $G_{p1}$ is stored in the storage device of the control device 50.

When the state signal $S_{st}$ indicates the independent drive mode, the correction proportional gain setting unit 93B sets the value of the correction proportional gain $G_p$ to a second correction proportional gain $G_{p2}$. When the drive mode of the motor 21 is the independent drive mode, the characteristics of the EPS 10 are measured, and the second correction proportional gain $G_{p2}$ is set to a value suitable for the measured characteristics of the EPS 10. The second correction proportional gain $G_{p2}$ is stored in the storage device of the control device 50.

When the state signal $S_{st}$ indicates the single-system drive mode, the correction proportional gain setting unit 93B sets the value of the correction proportional gain $G_p$ to a third correction proportional gain $G_{p3}$. When the drive mode of the motor 21 is the single-system drive mode, the characteristics of the EPS 10 are measured, and the third correction proportional gain $G_{p3}$ is set to a value suitable for the measured characteristics of the EPS 10. The third correction proportional gain $G_{p3}$ is stored in the storage device of the control device 50.

When the state signal $S_{st}$ indicates the reset drive mode, the correction proportional gain setting unit 93B sets the value of the correction proportional gain $G_p$ to a fourth correction proportional gain $G_{p4}$. When the drive mode of the motor 21 is the reset drive mode, the characteristics of the EPS 10 are measured, and the fourth correction proportional gain $G_{p4}$ is set to a value suitable for the measured characteristics of the EPS 10. The fourth correction proportional gain $G_{p4}$ is stored in the storage device of the control device 50.

The second multiplier 93C calculates a final proportional control torque $T_{p\_f}$ by multiplying the propor-

tional control torque $T_p$ calculated by the proportional processing unit 93A by the correction proportional gain $G_p$ set by the correction proportional gain setting unit 93B.

The correction proportional gain setting unit 93B and the second multiplier 93C constitute the characteristic changing unit that performs a process of changing the responsiveness of the feedback control in accordance with the drive mode of the motor 21.

The derivative control unit 94 includes a differentiator 94A, a derivative processing unit 94B, a correction derivative gain setting unit 94C, and a third multiplier 94D. The differentiator 94A calculates a torque deviation derivative $dT_h$ by differentiating, with respect to time, the torque deviation $\Delta T_h$ calculated by the subtractor 91.

The derivative processing unit 93B calculates a derivative control torque $T_d$ by multiplying the torque deviation derivative $dT_h$ calculated by the differentiator 94A by a derivative gain $K_d$. The derivative control torque $T_d$ is a value proportional to the derivative of the torque deviation $\Delta T_h$. For example, the derivative processing unit 94B may calculate the derivative gain $K_d$ in accordance with the traveling state of the vehicle. The traveling state is reflected by, for example, the vehicle speed V.

The correction derivative gain setting unit 94C receives the state signal $S_{st}$ generated by the drive state determination unit 88 and sets the value of a correction derivative gain $G_d$ in accordance with the received state signal $S_{st}$. The correction derivative gain $G_d$ is a feedback gain that is a control parameter related to the responsiveness of the feedback control.

When the state signal $S_{st}$ indicates the cooperative drive mode, the correction derivative gain setting unit 94C sets the value of the correction derivative gain $G_d$ to a first correction derivative gain $G_{d1}$. When the drive mode of the motor 21 is the cooperative drive mode, the characteristics of the EPS 10 are measured, and the first correction derivative gain $G_{d1}$ is set to a value suitable for the measured characteristics of the EPS 10. The first correction derivative gain $G_{d1}$ is stored in the storage device of the control device 50.

When the state signal $S_{st}$ indicates the independent drive mode, the correction derivative gain setting unit 94C sets the value of the correction derivative gain $G_d$ to a second correction derivative gain $G_{d2}$. When the drive mode of the motor 21 is the independent drive mode, the characteristics of the EPS 10 are measured, and the second correction derivative gain $G_{d2}$ is set to a value suitable for the measured characteristics of the EPS 10. The second correction derivative gain $G_{d2}$ is stored in the storage device of the control device 50.

When the state signal $S_{st}$ indicates the single-system drive mode, the correction derivative gain setting unit 94C sets the value of the correction derivative gain $G_d$ to a third correction derivative gain $G_{p3}$. When the drive mode of the motor 21 is the single-system drive mode, the characteristics of the EPS 10 are measured, and the third correction derivative gain $G_{p3}$ is set to a value suitable for the measured characteristics of the EPS 10. The third correction derivative gain $G_{p3}$ is stored in the storage device of the control device 50.

When the state signal $S_{st}$ indicates the reset drive mode, the correction derivative gain setting unit 94C sets the value of the correction derivative gain $G_d$ to a fourth correction derivative gain $G_{d4}$. When the drive mode of the motor 21 is the reset drive mode, the characteristics of the EPS 10 are measured, and the fourth correction derivative gain $G_{p4}$ is set to a value suitable for the measured characteristics of the EPS 10. The fourth correction derivative gain $G_{d4}$ is stored in the storage device of the control device 50.

The third multiplier 94D calculates a final derivative control torque $T_{d\_f}$ by multiplying the derivative control torque $T_d$ calculated by the derivative processing unit 94B by the correction derivative gain $G_d$ set by the correction derivative gain setting unit 94C.

The correction derivative gain setting unit 94C and the third multiplier 94D constitute the characteristic changing unit that performs a process of changing the responsiveness of the feedback control in accordance with the drive mode of the motor 21.

The disturbance estimation unit 95 is configured to estimate and compensate for a disturbance torque. The disturbance torque is a nonlinear torque that occurs as a disturbance in the actual plant, namely the EPS 10, and is a torque, other than the torque generated by the motor 21, that affects the steering torque $T_h$. The disturbance estimation unit 95 includes a disturbance observer 95A and a parameter setting unit 95B.

The disturbance observer 95A estimates a disturbance torque $T_{obs}$ based on a nominal plant. The nominal plant is a model that simulates the actual plant, i.e., the EPS 10, that is the actual controlled object. The characteristics of the nominal plant are determined by parameters.

In the first command value calculation unit 62, the disturbance observer 95A receives the torque deviation $\Delta T_h$ calculated by the first subtractor 91 and the first current $I_{m1}$ detected by the first current sensor 64. The disturbance observer 95A calculates a disturbance torque $T_{obs}$ based on the torque deviation $\Delta T_h$ and the first current $I_{m1}$.

In the second command value calculation unit 72, the disturbance observer 95A receives the steering torque $T_h$ detected by the torque sensor 51 and the second current $I_{m2}$ detected by the second current sensor 74. The disturbance observer 95A calculates a disturbance torque $T_{obs}$ based on the torque deviation $\Delta T_h$ and the second current $I_{m2}$.

The parameter setting unit 95B receives the state signal $S_{st}$ generated by the drive state determination unit 88, and sets a parameter $X_{obs}$ of the nominal plant in accordance with the received state signal $S_{st}$. The parameter $X_{obs}$ relates to, for example, the characteristics of the nominal plant and includes the inertia etc. of the nominal plant.

When the state signal $S_{st}$ indicates the cooperative drive mode, the parameter setting unit 95B sets the parameter $X_{obs}$ to a first parameter $X_{obs1}$. When the drive mode of the motor 21 is the cooperative drive mode, the characteristics of the EPS 10 are measured, and the first parameter $X_{obs1}$ is set to a value suitable for the measured characteristics of the EPS 10. The first parameter $X_{obs1}$ is stored in the storage device of the control device 50.

When the state signal $S_{st}$ indicates the independent drive mode, the parameter setting unit 95B sets the parameter $X_{obs}$ to a second parameter $X_{obs2}$. When the drive mode of the motor 21 is the independent drive mode, the characteristics of the EPS 10 are measured, and the second parameter $X_{obs2}$ is set to a value suitable for the measured characteristics of the EPS 10. The second parameter $X_{obs2}$ is stored in the storage device of the control device 50.

When the state signal $S_{st}$ indicates the single-system drive mode, the parameter setting unit 95B sets the parameter $X_{obs}$ to a third parameter $X_{obs3}$. When the drive mode of the motor 21 is the single-system drive mode, the characteristics of the EPS 10 are measured, and the third parameter $X_{obs3}$ is set to a value suitable for the measured characteristics of the EPS 10. The third parameter $X_{obs3}$ is stored in the storage device of the control device 50.

When the state signal $S_{st}$ indicates the reset drive mode, the parameter setting unit 95B sets the parameter $X_{obs}$ to a fourth parameter $X_{obs4}$. When the drive mode of the motor 21 is the reset drive mode, the characteristics of the EPS 10 are measured, and the fourth parameter $X_{obs4}$ is set to a value suitable for the measured characteristics of the EPS 10. The fourth parameter $X_{obs4}$ is stored in the storage device of the control device 50.

The disturbance observer 95A calculates the disturbance torque $T_{obs}$ using the parameter $X_{obs}$ set by the parameter setting unit 95B. The parameter setting unit 95B constitutes the characteristic changing unit that performs a process of changing the responsiveness of the feedback control in accordance with the drive mode of the motor 21.

The third adder 96 receives the final proportional control torque $T_{p\_f}$ calculated by the second multiplier 93C and the final derivative control torque $T_{d\_f}$ calculated by the third multiplier 94D. The third adder 96 calculates a first pre-assist torque $T_{pre1}$ by adding the final proportional control torque $T_{p\_f}$ and the final derivative control torque $T_{d\_f}$.

The fourth adder 97 receives the final feedforward control torque $T_{ff\_f}$ calculated by the first multiplier 92C and the first pre-assist torque $T_{pre1}$ calculated by the third adder 96. The fourth adder 97 calculates a second pre-assist torque $T_{pre2}$ by adding the final feedforward control torque $T_{ff\_f}$ and the first pre-assist torque $T_{pre1}$.

The second subtractor 98 calculates a first assist torque $T_1{}^*$ by subtracting the disturbance torque $T_{obs}$ calculated by the disturbance observer 95A from the second pre-assist torque $T_{pre2}$ calculated by the fourth adder 97. The first assist torque $T_1{}^*$ in which the inertia of the EPS 10 and the disturbance torque $T_{obs}$ are compensated for is thus obtained.

<Configuration of Angle Feedback Control Unit 86>

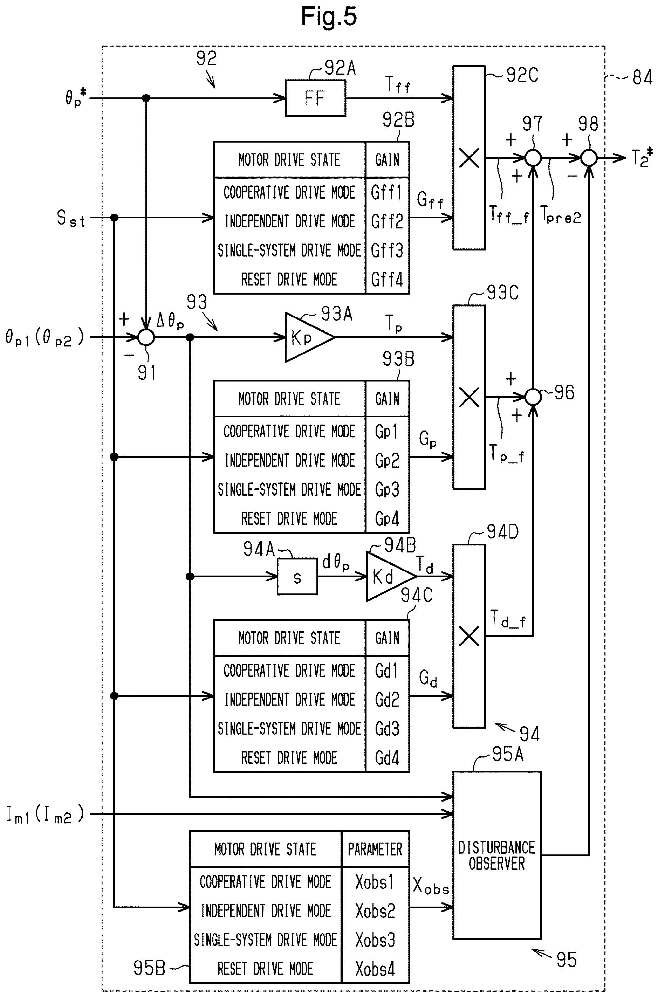

Next, the configuration of the angle feedback control unit 86 will be described. As shown in FIG. 5, the angle feedback control unit 86 has the same configuration as the torque feedback control unit 84. That is, the angle feedback control unit 86 includes a first subtractor 91, a feedforward control unit 92, a proportional control unit 93, a derivative control unit 94, a disturbance estimation unit 95, a third adder 96, a fourth adder 97, and a second subtractor 98.

However, the processing of the angle feedback control unit 86 differs from that of the torque feedback control unit 84 in the following respect. In the first command value calculation unit 62, the first subtractor 91 receives the target pinion angle $\theta_p{}^*$ calculated by the target angle calculation unit 85 and the first pinion angle $\theta_{p1}$ calculated by the first pinion angle calculation unit 61. The first subtractor 91 calculates an angle deviation $\Delta\theta_p$. The angle deviation $\Delta\theta_p$ is the difference between the target pinion angle $\theta_p{}^*$ and the first pinion angle $\theta_{p1}$.

In the second command value calculation unit 72, the first subtractor 91 receives the target pinion angle $\theta_p{}^*$ calculated by the target angle calculation unit 85 and the second pinion angle $\theta_{p2}$ calculated by the second pinion angle calculation unit 71. The first subtractor 91 calculates an angle deviation $\Delta\theta_p$. The angle deviation $\Delta\theta_p$ is the difference between the target pinion angle $\theta_p{}^*$ and the second pinion angle $\theta_{p2}$.

In the first command value calculation unit 62 and the second command value calculation unit 62, a feedforward processing unit 92A calculates a target pinion angular acceleration by, for example, taking a second-order derivative of the target pinion angle $\theta_p{}^*$. The feedforward processing unit 92A calculates a feedforward control torque $T_{ff}$ by multiplying the calculated target pinion angular acceleration by the inertia of the EPS 10.

In the first command value calculation unit 62 and the second command value calculation unit 62, a proportional processing unit 93A calculates a proportional control torque $T_p$ by multiplying the angle deviation $\Delta\theta_p$ calculated by the first subtractor 91 by a proportional gain $K_p$.

In the first command value calculation unit 62 and the second command value calculation unit 62, a differentiator 94A calculates an angle deviation derivative $d\theta_p$ by differentiating, with respect to time, the angle deviation $\Delta\theta_p$ calculated by the first subtractor 91.

In the first command value calculation unit 62 and the second command value calculation unit 62, a derivative processing unit 93B calculates a derivative control torque $T_d$ by multiplying the angle deviation deri-

vative $d\theta_p$ calculated by the differentiator 94A by a derivative gain $K_d$.

In the first command value calculation unit 62, a disturbance observer 95A receives the angle deviation $\Delta\theta_p$ calculated by the first subtractor 91 and the first current $I_{m1}$ detected by the first current sensor 64. The disturbance observer 95A calculates a disturbance torque $T_{obs}$ based on the angle deviation $\Delta\theta_p$ and the first current $I_{m1}$.

In the second command value calculation unit 72, the disturbance observer 95A receives the angle deviation $\Delta\theta_p$ calculated by the first subtractor 91 and the second current $I_{m2}$ detected by the second current sensor 74. The disturbance observer 95A calculates a disturbance torque $T_{obs}$ based on the angle deviation $\Delta\theta_p$ and the second current $I_{m2}$.

The second subtractor 98 calculates a second assist torque $T_2^*$ by subtracting the disturbance torque $T_{obs}$ calculated by the disturbance observer 95A from a second pre-assist torque $T_{pre2}$ calculated by the fourth adder 97. The second assist torque $T_2^*$ in which the inertia of the EPS 10 and the disturbance torque $T_{obs}$ are compensated for is thus obtained.

<Effects of Embodiment>

The present embodiment has the following effects.

(1) The responsiveness of the feedback control executed by the torque feedback control unit 84 and the angle feedback control unit 86 is changed in accordance with the drive mode of the motor 21. Accordingly, even when the drive mode of the motor 21 changes, responsiveness corresponding to the drive mode of the motor 21 can be ensured. Control stability is also ensured. The steering feeling can thus be improved.

(2) A feedback gain that is a control parameter related to the responsiveness of the feedback control is changed in accordance with the drive mode of the motor 21. The feedback gain includes the correction proportional gain $G_p$ and the correction derivative gain $G_d$. Since the feedback gain is appropriately set in accordance with the drive mode of the motor 21, responsiveness can be ensured even when the drive mode of the motor 21 changes.

(3) The drive modes of the motor 21 includes the cooperative drive mode that is the first drive mode, the independent drive mode that is the second drive mode, and the single-system drive mode that is the third drive mode. With this configuration, the responsiveness of the feedback control can be changed in accordance with the drive mode of the motor 21.

(4) A feedforward gain that is a control parameter related to the responsiveness of the feedforward control executed by the torque feedback control unit 84 and the angle feedback control unit 86 is changed in accordance with the drive mode of the motor 21. Accordingly, even when the drive mode of the motor 21 changes, responsiveness corresponding to the drive mode of the motor 21 can be ensured.

(5) The torque feedback control unit 84 and the angle feedback control unit 86 include the disturbance observer 95A. The disturbance observer 95A calculates a disturbance torque by using a model that simulates the steering system 10. The disturbance torque is a torque other than the torque generated by the motor 21. Parameters related to the characteristics of the model are changed in accordance with the drive mode of the motor 21. That is, the characteristics of the model are appropriately changed in accordance with the drive mode of the motor 21. Accordingly, the calculation accuracy of the disturbance torque is improved.

<Other Embodiments>

The present embodiment may be modified as follows.

- The torque feedback control unit 84 may include an integral control unit. The integral control unit calculates an integral control torque by multiplying the torque deviation $\Delta T_h$ calculated by the first subtractor 91 by an integral gain. The integral control unit receives the state signal $S_{st}$ generated by the drive state determination unit 88, and sets a value of a correction integral gain in accordance with the received state signal $S_{st}$. The correction integral gain is a feedback gain that is a control parameter related to the responsiveness of the feedback control. The integral control unit calculates a final integral control torque by multiplying the calculated integral control torque by the correction integral gain. That is, the integral control unit has a function as the characteristic changing unit that performs a process of changing the responsiveness of the feedback control in accordance with the drive mode of the motor 21. The second pre-assist torque $T_{pre2}$ is obtained by adding the final feedforward control torque $T_{ff\_f}$, the final proportional control torque $T_{p\_f}$, the final derivative control torque $T_{d\_f}$, and the final integral control torque. Similarly, the angle feedback control unit 86 may also include an integral control unit.
- Depending on product specifications, the first command value calculation unit 62 and the second command value calculation unit 72 may be configured without the axial force calculation unit 82.
- Depending on product specifications, the torque feedback control unit 84 alone may include the feedforward gain setting unit 92B, the correction proportional gain setting unit 93B, the correction derivative gain setting unit 94C, and the parameter setting unit 95B. In this case, in the angle feedback control unit 86, the feedforward control torque $T_{ff}$ calculated by the feedforward processing unit 92A directly becomes the final feedforward control torque $T_{ff\_f}$. The proportional control torque $T_p$ calculated by the proportional processing unit 93A directly becomes the final proportional control torque $T_{p\_f}$. The derivative control torque $T_d$ calculated by the derivative processing unit 93B directly becomes the final derivative control torque $T_{d\_f}$. The disturbance observer 95A estimates the disturbance torque $T_{obs}$ based on a nominal plant having predetermined parameters, regardless of the drive mode of the motor 21. Any configuration may be employed as long as it allows differences in the characteristics of the EPS 10 depending on the drive mode of the motor 21.

- Depending on product specifications, the angle feedback control unit 86 alone may include the feedforward gain setting unit 92B, the correction proportional gain setting unit 93B, the correction derivative gain setting unit 94C, and the parameter setting unit 95B. In this case, in the torque feedback control unit 84, the feedforward control torque $T_{ff}$ calculated by the feedforward processing unit 92A directly becomes the final feedforward control torque $T_{ff\_f}$. The proportional control torque $T_p$ calculated by the proportional processing unit 93A directly becomes the final proportional control torque $T_{p\_f}$. The derivative control torque $T_d$ calculated by the derivative processing unit 93B directly becomes the final derivative control torque $T_{d\_f}$. The disturbance observer 95A estimates the disturbance torque $T_{obs}$ based on a nominal plant having predetermined parameters, regardless of the drive mode of the motor 21. Any configuration may be employed as long as it allows differences in the characteristics of the EPS 10 depending on the drive mode of the motor 21.

- Depending on product specifications, the torque feedback control unit 84 and the angle feedback control unit 86 may be configured without the feedforward control unit 92. The torque feedback control unit 84 and the angle feedback control unit 86 may also be configured without the disturbance estimation unit 95. The torque feedback control unit 84 and the angle feedback control unit 86 may further be configured without the feedforward control unit 92 and the disturbance estimation unit 95.

- The control device 50 may be applied not only to the EPS 10 of a type that applies an assist force to the steered shaft 15, but also to an EPS of a type that applies an assist force to the steering shaft 13. In this case, as indicated by the long dashed double-short dashed lines in FIG. 1, the motor 21 is connected to the steering shaft 13 via the reduction mechanism 22. The second pinion shaft 23 may be omitted.

- The control device 50 may also be applied to a steer-by-wire steering system. In this steering system, the steering wheel 11 and the steered wheels 12 are not mechanically connected for power transmission. In this case, the motor 21 functions as a reaction motor that generates a steering reaction force or as a steering motor that generates a steering force. The steering reaction force is a force applied to the steering shaft 13 and is a force in a direction opposite to the direction in which the steering wheel 11 is steered. The steering force is a force for steering the steered wheels 12.

- The expression "at least one" as used in the present specification means "one or more" of desired options. As one example, when there are two options, the expression "at least one" as used in the present specification means "one of the options" or "both of the two options." As another example, when there are three or more options, the expression "at least one" as used in the present specification means "one of the options" or "any combination of two or more options."

**Claims**

1. A steering control device configured to control a motor, the motor being configured to drive a steering system configured to steer a steered wheel of a vehicle, the motor including two winding groups, the steering control device comprising two command value calculation units respectively corresponding to the two winding groups, each of the command value calculation units being configured to calculate, based on a steering state, a command value that is a target value of torque to be generated in a corresponding one of the winding groups, wherein:

   each of the command value calculation units includes

      a first processing unit configured to calculate, based on the steering state, a target value of steering torque,
      a second processing unit configured to calculate a first torque command value through execution of feedback control that causes the steering torque to follow the target value of the steering torque,
      a third processing unit configured to calculate, based on the steering state and the first torque command value, a target value of a rotation angle of a shaft configured to rotate in conjunction with a steering operation of the steered wheel,
      a fourth processing unit configured to calculate a second torque command value through execution of feedback control that causes an actual angle to follow the target value of the rotation angle, and
      a fifth processing unit configured to calculate the command value based on the first torque command value and the second torque command value; and

at least one of the second processing unit and the fourth processing unit includes a characteristic changing unit configured to perform a responsiveness changing process of changing responsiveness of the feedback control in accordance with a drive mode of the motor.

2. The steering control device according to claim 1, wherein the responsiveness changing process is a process of changing, in accordance with the drive mode, a feedback gain that is a control parameter related to the responsiveness of the feedback control.

3. The steering control device according to claim 1 or 2, wherein the drive mode includes

   a first drive mode in a case where power supply to both of the two winding groups is normal,
   a second drive mode in a case where an abnormality in power supply to one of the two winding groups has not been determined and there is a possibility of returning to normal, and
   a third drive mode in a case where an abnormality in power supply to one of the two winding groups has been determined and there is no possibility of returning to normal.

4. The steering control device according to claim 1 or 2, wherein:

   at least one of the second processing unit and the fourth processing unit further includes a feedforward processing unit configured to calculate a feedforward control torque reflected in the command value, through execution of feedforward control based on the target value; and
   the responsiveness changing process includes a process of changing, in accordance with the drive mode, a feedforward gain that is a control parameter related to the responsiveness of the feedforward control.

5. The steering control device according to claim 1 or 2, wherein:

   at least one of the second processing unit and the fourth processing unit further includes a disturbance observer configured to calculate a disturbance torque by using a model that simulates the steering system, the disturbance torque being a torque other than torque generated by the motor; and
   the responsiveness changing process includes a process of changing, in accordance with the drive mode, a parameter related to a characteristic of the model.

# Fig.1

Fig.2

Fig.3

EP 4 733 174 A1

## Fig.4

$T_h^*$ → 92 → FF (92A) → $T_{ff}$ → 92C

84

| MOTOR DRIVE STATE | GAIN |
|---|---|
| COOPERATIVE DRIVE MODE | Gff1 |
| INDEPENDENT DRIVE MODE | Gff2 |
| SINGLE-SYSTEM DRIVE MODE | Gff3 |
| RESET DRIVE MODE | Gff4 |

92B

$G_{ff}$

$S_{st}$

× 

$T_{ff\_f}$  97  $T_{pre2}$  98  → $T_1^*$

$T_h$  +  $\Delta T_h$  93  → $K_p$ (93A) → $T_p$  93C

91 −

| MOTOR DRIVE STATE | GAIN |
|---|---|
| COOPERATIVE DRIVE MODE | Gp1 |
| INDEPENDENT DRIVE MODE | Gp2 |
| SINGLE-SYSTEM DRIVE MODE | Gp3 |
| RESET DRIVE MODE | Gp4 |

93B

$G_p$

×

$T_{p\_f}$  96

94A → s → $dT_h$ → $K_d$ (94B) → $T_d$ → 94D

94C

| MOTOR DRIVE STATE | GAIN |
|---|---|
| COOPERATIVE DRIVE MODE | Gd1 |
| INDEPENDENT DRIVE MODE | Gd2 |
| SINGLE-SYSTEM DRIVE MODE | Gd3 |
| RESET DRIVE MODE | Gd4 |

94B... $G_d$

×

$T_{d\_f}$

$T_{pre1}$

94

95A

$I_{m1}(I_{m2})$

| MOTOR DRIVE STATE | PARAMETER |
|---|---|
| COOPERATIVE DRIVE MODE | Xobs1 |
| INDEPENDENT DRIVE MODE | Xobs2 |
| SINGLE-SYSTEM DRIVE MODE | Xobs3 |
| RESET DRIVE MODE | Xobs4 |

95B

$X_{obs}$

DISTURBANCE OBSERVER

$T_{obs}$

95

## Fig.5

## INTERNATIONAL SEARCH REPORT

| International application No. |
| --- |
| **PCT/JP2023/022803** |

| A. | CLASSIFICATION OF SUBJECT MATTER |
| --- | --- |

*B62D 6/00*(2006.01)i; *B62D 5/04*(2006.01)i
FI:   B62D6/00; B62D5/04

According to International Patent Classification (IPC) or to both national classification and IPC

| B. | FIELDS SEARCHED |
| --- | --- |

Minimum documentation searched (classification system followed by classification symbols)

B62D6/00; B62D5/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2022-056320 A (NSK LTD.) 08 April 2022 (2022-04-08)<br>entire text, all drawings | 1-5 |
| A | JP 2020-185918 A (JTEKT CORP.) 19 November 2020 (2020-11-19)<br>entire text, all drawings | 1-5 |
| A | JP 2020-100274 A (JTEKT CORP.) 02 July 2020 (2020-07-02)<br>entire text, all drawings | 1-5 |
| A | JP 2020-014347 A (JTEKT CORP.) 23 January 2020 (2020-01-23)<br>entire text, all drawings | 1-5 |
| A | JP 2017-210079 A (NSK LTD.) 30 November 2017 (2017-11-30)<br>entire text, all drawings | 1-5 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **10 August 2023** | **22 August 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/022803**

| Patent document cited in search report | | | Publication date (day/month/year) | Patent family member(s) | | | Publication date (day/month/year) |
|---|---|---|---|---|---|---|---|
| JP | 2022-056320 | A | 08 April 2022 | (Family: none) | | | |
| JP | 2020-185918 | A | 19 November 2020 | (Family: none) | | | |
| JP | 2020-100274 | A | 02 July 2020 | US | 2020/0198694 | A1 | |
| | | | | entire text, all drawings | | | |
| | | | | EP | 3677488 | A1 | |
| | | | | CN | 111348102 | A | |
| JP | 2020-014347 | A | 23 January 2020 | US | 2020/0023890 | A1 | |
| | | | | entire text, all drawings | | | |
| | | | | EP | 3597508 | A2 | |
| | | | | CN | 110733560 | A | |
| JP | 2017-210079 | A | 30 November 2017 | (Family: none) | | | |

Form PCT/ISA/210 (patent family annex) (January 2015)

**REFERENCES CITED IN THE DESCRIPTION**

**Patent documents cited in the description**

- JP 2020203499 A